# FASCICULE DE BREVET EUROPEEN

(11) **EP 3 165 704 B1**
(45) Date de publication et mention de la délivrance du brevet: **15.08.2018**
(21) Numéro de dépôt: 16195418.5
(22) Date de dépôt: 25.10.2016
(51) Int. Cl.: E06B 9/17, E06B 9/70, E06B 9/72

(54) **SUPPORT DE VOLET ROULANT À JOUE LATÉRALE INCLUANT LES MOYENS D'ENTRAÎNEMENT**
HALTERUNG EINES ROLLLADENS MIT SEITLICHER WANGE DIE ANTRIEBSMITTEL BEINHALTET
ROLLER SHUTTER MOUNTING WITH SIDE FLANGE INCLUDING THE DRIVE MEANS

(30) Priorité: 03.11.2015 FR 1560516
(43) Date de publication de la demande: 10.05.2017
(73) Titulaire: BUBENDORFF Société Anonyme, 68220 Attenschwiller (FR)
(72) Inventeur: EVREUX, Gérard, 74130 AYZE (FR)
(74) Mandataire: Cabinet Bleger-Rhein-Poupon

(56) Documents cités:
- WO-A1-2005/088062
- WO-A1-2011/113093
- WO-A2-01/77479

## Description

La présente invention se situe dans le domaine des systèmes de fermeture motorisés de type volets roulants ou similaires. Elle a plus précisément trait aux supports motorisés de volets qui comportent un axe ou tube central autour duquel s'enroule le volet et, aux deux extrémités de l'axe, deux joues latérales qui peuvent faire partie de son coffre de rangement.

De manière connue, un volet roulant comprend un tablier, généralement guidé verticalement par l'intermédiaire de glissières latérales et dont le bord supérieur est fixé à l'axe d'enroulement. Cet axe est relié à l'encadrement de l'ouverture à équiper du volet notamment au moyen desdites joues, qui bordent en fait latéralement la structure d'entraînement du tablier. L'axe est maintenu libre en rotation par rapport auxdites joues, et entraîné par un système manuel ou par un moteur d'entraînement.

Lorsque le volet est motorisé, ce qui est le cas dans le cadre de l'invention, le dispositif d'entraînement est classiquement intégré dans l'axe d'enroulement et comporte un moteur électrique tubulaire couplé à au moins un réducteur également tubulaire placé dans le prolongement du moteur, la rotation du rotor étant transmise à l'axe d'enroulement via le réducteur. Historiquement, les moteurs utilisés étaient des moteurs asynchrones monophasés, choisis pour leur robustesse et leur coût raisonnable, mais qui présentent des inconvénients en termes de performances brutes et au démarrage.

C'est la raison pour laquelle les moteurs synchrones sans balais, qui présentent un meilleur rendement et permettent une précision accrue dans la maîtrise des vitesses et couples d'entraînement, sont actuellement privilégiés pour ce type d'application, et remplacent progressivement les machines asynchrones. La technologie de ces moteurs et de leur module électronique de pilotage offre plus de possibilités de variation des paramètres de fonctionnement, avec une plage de variation des vitesses plus étendue et un maintien du couple. Le bruit et les vibrations générés par un moteur sans balai sont par ailleurs inférieurs à ce qui existe dans les autres types de moteur disponibles.

Le moteur d'entraînement est associé à des moyens de pilotage électroniques disposés à proximité, par exemple à l'intérieur de l'axe d'enroulement, comme c'est par exemple montré dans le document FR 2 883 913. Selon une variante, les moyens de pilotage ou de commande électroniques peuvent être positionnés à l'extrémité de l'axe, par exemple fixés sur la face interne d'une joue latérale.

Le positionnement du dispositif d'entraînement dans l'axe présente des inconvénients liés d'une part à son emplacement, et d'autre part à la configuration technique qu'il implique. L'implantation des éléments constitutifs du dispositif à l'intérieur du volume de l'axe d'enroulement les rend plus difficile d'accès, et peut par conséquent rendre les opérations de maintenance potentiellement délicates. Les moteurs tubulaires compatibles avec les dimensions internes des axes, qui présentent typiquement des diamètres de l'ordre de 40 mm, fonctionnent par ailleurs nécessairement avec des réducteurs mécaniques du fait des vitesses requises pour obtenir des couples de fonctionnement compatibles avec l'enroulement de volets roulants. Une défaillance du dispositif d'entraînement peut donc résulter des différents maillons du système, c'est-à-dire du moteur proprement dit ou du/des réducteur(s), l'existence de composants distincts susceptibles de tomber séparément en panne diminuant la fiabilité de l'ensemble.

Pour toutes ces raisons, il a été proposé des motorisations placées dans les joues latérales, comme c'est par exemple décrit dans les documents WO 2005/088062 et WO 2001/77479 : elles sont plus faciles d'accès, donc potentiellement plus pratiques pour tout ce qui concerne les réparations, modifications etc.

Dans les deux cas, cependant, les configurations mécaniques sont plutôt complexes, essentiellement parce que les moteurs utilisés sont orientées de telle sorte que leur axe de rotation est d'allure perpendiculaire à l'axe de rotation du volet ou du store qu'ils motorisent. Il faut donc prévoir, en sortie de l'arbre moteur, des étages mécaniques permettant le changement d'orientation de la rotation et, le cas échéant, des étages d'adaptation de la vitesse, typiquement réducteurs, pour la rendre compatible avec la vitesse d'enroulement/déroulement des écrans obturateurs que constituent les volets/stores.

Ces mécanismes dans les joues latérales sont volumineux, parfois bien plus que la section d'un coffre contenant un tel écran obturateur dans son état complètement enroulé, ce qui n'est guère pratique, et souvent peu esthétique. La complexité mécanique entraîne par ailleurs un risque accru de défaut de fiabilité, notamment du fait de l'usure ou de l'encrassement des composants. L'aspect économique de cette complexité est évidemment défavorable, le coût des multiples étages et composants étant loin d'être négligeable.

L'invention remédie à ces insuffisances, et propose une solution mécaniquement et électriquement fiable, notamment parce qu'elle est robuste et simple à mettre en oeuvre et à utiliser. Cette solution est autant sinon plus adaptée que ses devancières en termes d'accès au système de motorisation, permettant de rendre les opérations de maintenance très aisées. Elle s'avère également fonctionnellement très adaptée au domaine des volets roulants motorisés.

Selon l'invention, le support du volet roulant, comportant classiquement un axe d'enroulement du tablier du volet relié à ses extrémités axiales à des joues latérales, et des moyens d'entraînement motorisés dudit axe d'enroulement, lesdits moyens d'entraînement étant positionnés dans une des joues latérales, est tel que lesdits moyens d'entraînement consistent en un moteur électrique dont le rotor est relié à l'axe et le stator est solidarisé à la joue.

Cette configuration est également particulièrement avantageuse en ce qu'elle est facilement pilotable par des moyens électroniques appropriés.

De préférence, le moteur électrique est un moteur sans balai, qui présente comme mentionné auparavant un rendement supérieur aux moteurs asynchrones ou DC à balais, et dont la gestion électronique est particulièrement souple. Un moteur sans balais est plus compact qu'un moteur asynchrone de même puissance, de sorte qu'il est possible de le loger dans une joue. La facilité de mise en oeuvre de la commande de variation des vitesses permises par ce type de moteur permet par ailleurs de le régler pour un fonctionnement optimal, fonction de la charge (couple stable qui dépend de la tension de commande) mais également du niveau de bruit. Ce dernier paramètre n'est pas anodin, l'application au volet roulant relevant de l'habitat, et induisant des exigences liées au confort des habitants.

De préférence encore, le moteur sans balai est à rotor externe situé en périphérie radiale du stator, à entrefer d'allure parallèle à l'axe de rotation du moteur. Dans un tel moteur dit « outrunner », les aimants permanents sont polarisés dans une direction radiale.

Pour implanter le moteur dans la joue, et tirer parti des dimensions transversales de cette dernière, on utilise de fait un moteur plat, à grand diamètre, fonctionnant avec un grand couple et une vitesse réduite. Les aimants présents sur le rotor sont de fait disposés selon un diamètre important, ce qui crée un couple intéressant pour entraîner l'axe d'enroulement. L'utilisation d'un tel moteur « couple » permet de s'affranchir de l'utilisation d'un réducteur, les vitesses de fonctionnement étant compatibles avec les vitesses d'enroulement/déroulement d'un volet roulant. Ces moteurs « outrunner » sont particulièrement adaptés à des applications qui nécessitent un fort couple, dans lesquelles on peut en outre tirer parti de leur capacité à être reliés à la charge sans nécessiter de dispositif de réduction.

Les moteurs sans balais fonctionnent en pratique avec des capteurs détectant la position du rotor, en général des capteurs à effet Hall qui permettent de connaître à tout moment la position du rotor et d'adapter en conséquence l'alimentation des bobines du stator et le champ magnétique. Ce mode de fonctionnement permet une excellente régulation de la vitesse et de la position. Dans une telle configuration plane intégrée à une joue, selon une possibilité, au moins un capteur de mesure de la position angulaire du rotor est placé sur la face interne de la paroi transversale de la joue, en regard des aimants permanents du rotor.

Selon une variante possible, le moteur sans balais peut aussi être à rotor disque à entrefer d'allure perpendiculaire à l'axe de rotation du rotor, la direction de polarisation des aimants étant alors axiale. Dans ce cas, pour la détection de la position du rotor, au moins un capteur de mesure de la position angulaire du rotor peut être placé, en regard des aimants permanents du rotor, sur la face interne de la paroi axiale de la joue ou sur le stator dans une direction d'allure parallèle à ladite face interne.

Dans les deux variantes, la configuration particulière du moteur, à grand diamètre et faible épaisseur pour se conformer à la géométrie de la joue, permet de travailler à couple et vitesse adéquates pour l'application au volet roulant, sans nécessiter le recours à un réducteur mécanique. L'épaisseur réduite de ces moteurs permet de limiter la largeur de la joue et par conséquent la distance entre l'axe (et donc le tablier) et le bord de l'ouverture dans laquelle le volet est installé.

Le flasque du rotor est de préférence fixé à l'axe d'enroulement du tablier du volet, selon une liaison directe sans pièce intermédiaire. La présente invention simplifie en fait considérablement la structure du système de motorisation du volet, et en facilite la maintenance en rendant l'accès aux composants du système immédiat. Il est à noter que du fait même de cette conception simplifiée, augmentant la fiabilité de l'ensemble, les opérations de maintenance devraient en outre être sensiblement plus limitées.

De préférence, le moteur est choisi avec un coefficient **Kv** inférieur à 1, de préférence compris entre 0,5 et 1, et de préférence encore de l'ordre de 0,5. Le coefficient Kv caractérise la capacité du moteur à transformer la puissance qu'il reçoit en couple ou en vitesse, la puissance étant le produit du couple par la vitesse de rotation. Ainsi, le choix d'un coefficient Kv plutôt faible (moteurs à fort couples) consacre la possibilité de disposer d'un couple suffisant pour entraîner en mouvement l'axe et le tablier du volet. Le choix d'un Kv faible indique au surplus l'utilisation d'un courant relativement faible et permet par conséquent d'obtenir un rendement plus élevé. Un Kv plutôt faible ne permet enfin qu'une accélération limitée, ce qui donne une impression d'onctuosité dans les mouvements du moteur, et donc du tablier de volet qu'il entraîne.

La présente invention, qui s'applique à titre premier à des supports de volets roulants, concerne également les volets roulants qui en sont munis.

L'invention va à présent être décrite plus en détail, en référence aux figures annexées, pour lesquelles :
- la figure 1 représente très schématiquement une coupe axiale partielle d'une première variante de support de volet roulant montrant des moyens d'entraînement sous forme d'un moteur sans balais à entrefer parallèle à son axe de rotation ; et
- la figure 2 montre, selon un schéma similaire, une coupe axiale partielle d'une seconde variante de support de volet roulant dont les moyens d'entraînement sont sous forme d'un moteur sans balais à rotor disque à entrefer perpendiculaire à son axe de rotation.

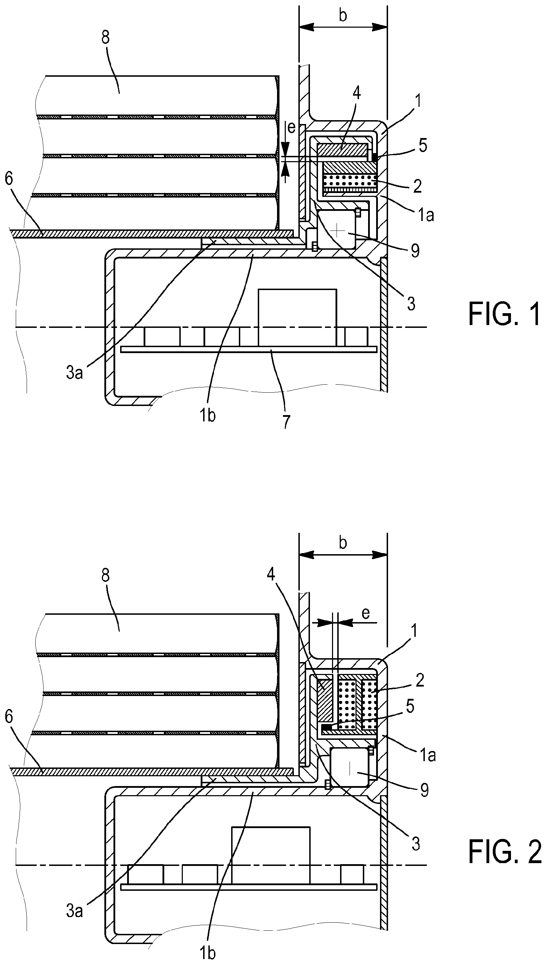

En référence à la figure 1, une joue (1) d'un support de volet roulant est reliée à un axe (6) d'enroulement d'un tablier (8) de volet via un système d'entraînement comportant à titre essentiel un moteur (2, 3) positionné dans la joue (1), prévue creuse à cet effet et de largeur b limitée. Le moteur utilisé dans les exemples des figures 1 et 2 est un moteur sans balais dont le stator (2), de section annulaire, est fixé sur la face interne de la paroi latérale (la) de la joue creuse (1). Le rotor (3) est monté libre en rotation sur un palier (1b) cylindrique qui s'étend à l'intérieur de l'axe (6), un roulement (9) étant interposé entre le palier (1b) et le rotor (3). Dans les exemples représentés, l'axe (6) est directement fixé sur un flasque (3a) du rotor (3).

La configuration de la figure 1 comporte un moteur sans balais dit « outrunner » dans lequel le rotor (3) est externe au stator (2), et présente également une configuration d'allure annulaire dont la face intérieure en regard du stator (2) est munie d'aimants permanents (4). L'entrefer e existant entre le rotor (3) et le stator (2) se développe dans une direction axiale, parallèlement à l'axe de rotation du rotor (3), et est par conséquent de forme tubulaire. Le champ magnétique crée par les bobines du stator (2) est d'allure radiale, c'est-à-dire perpendiculaire à l'axe de rotation du rotor (3), de même que la direction de polarisation des aimants permanents (4) du rotor (2).

Une carte électronique (7) de pilotage du moteur sans balais est par exemple solidarisée au palier cylindrique (la), et par conséquent placée dans l'axe d'enroulement (6) du volet. Cette configuration à moteur plat localisé dans la joue (1) avec une carte électronique de pilotage (7) du moteur disposé centralement permet d'optimiser la gestion de l'espace utilisé par les moyens d'entraînement sans obérer les capacités d'entraînement du système, puisque le moteur à grand diamètre qui résulte de cette configuration est, en termes de couple généré et de vitesse de fonctionnement, particulièrement performant pour cette application aux volets roulants motorisés.

La gestion de l'espace disponible est sensiblement la même dans la configuration de la figure 2, mais avec un moteur sans balais à rotor disque (2), c'est-à-dire à rotor (2) en forme d'anneau plat se développant dans un plan sensiblement transversal. Dans cette hypothèse, le stator (2) présente des bobinages créant un champ magnétique de direction axiale, parallèle à l'axe de rotation du rotor (3). Le rotor (3) à disque à ouverture centrale comporte, sur sa face transversale en regard du stator (2), une pluralité d'aimants permanents (4) disposés en vis-à-vis des bobinages du stator (2). L'entrefer e ainsi créé prend la forme d'un disque annulaire de faible épaisseur s'étendant dans un plan perpendiculaire à l'axe de rotation (3a).

Le pilotage du moteur, par alimentation des bobinages du stator (2) en courant triphasé, est réalisé suivant la détection de la position du rotor (3) à chaque instant. Au moins un capteur de détection de la position, en l'espèce au moins un capteur à effet Hall (5), est par conséquent solidarisé à la joue (1) ou au stator (2). Dans la configuration de la figure 1, un capteur (5) est représenté fixé sur la face interne de la paroi latérale (1a) de la joue (1), en regard des aimants permanents (4) du rotor (3) .

Dans la configuration à moteur sans balais à rotor (3) disque apparaissant en figure 2, un capteur (5) est figuré dans le prolongement du stator (2), orienté dans une direction axiale de manière à se placer en regard des aimants permanents (4) du rotor (3). Les moyens de commande du moteur sont donc prévus pour commander l'alimentation des bobines du stator (2) en réponse à des signaux indicatifs de la position du rotor(3). Il s'agit essentiellement d'une électronique de commande placée sur une carte (7) dotée des circuits électroniques nécessaires au traitement des signaux de position issus du ou des capteurs (5) et commandant ensuite l'alimentation triphasée de trois groupes de bobines de façon séquentielle pour créer un champ magnétique tournant à la même fréquence que les signaux d'alimentation. Chaque aimant permanent (4) du rotor (3) cherche à s'orienter à chaque instant dans le sens du champ créé par les bobinages, la rotation du rotor (3) résultant de l'alimentation desdits bobinages qui est telle que le champ généré est en permanence en avance sur la position du rotor (3).

Dans les deux configurations représentées, données à titre d'exemples, la carte électronique (7) est positionnée à l'intérieure d'une partie centrale cylindrique (1b) creuse de la joue (1) utilisée comme palier pour le roulement (9). Cette partie (1b) est logée à l'intérieur de l'axe (6) d'enroulement du volet roulant motorisé.

L'invention ne se limite bien entendu pas aux exemples décrits et expliqués en référence aux figures, mais elle englobe les variantes et versions qui entrent dans la portée des revendications.

## Revendications

1. Support de volet roulant, comportant un axe d'enroulement (6) du tablier (8) du volet relié à ses extrémités axiales à des joues latérales (1) et des moyens d'entraînement (2, 3) motorisés dudit axe d'enroulement (6), lesdits moyens d'entraînement (2, 3) étant positionnés dans une des joues latérales (1), **caractérisé en ce que** les moyens d'entraînement consistent en un moteur électrique dont le rotor (3) est relié à l'axe (6) et le stator (2) est solidarisé à la joue (1).

2. Support de volet roulant selon la revendication précédente, **caractérisé en ce que** le moteur électrique est un moteur sans balai.

3. Support de volet roulant selon la revendication précédente, **caractérisé en ce que** le moteur sans balai est à rotor (3) externe situé en périphérie radiale du stator (2), à entrefer e d'allure parallèle à l'axe de rotation du moteur.

4. Support de volet roulant selon la revendication précédente, **caractérisé en ce qu'**au moins un capteur (5) de mesure de la position angulaire du rotor (3) est placé sur la face interne de la paroi transversale (la) de la joue (1) en regard des aimants permanents (4) du rotor (3).

5. Support de volet roulant selon la revendication 2, **caractérisé en ce que** le moteur sans balai est à rotor (3) disque à entrefer e d'allure perpendiculaire à l'axe de rotation du rotor.

6. Support de volet roulant selon la revendication précédente, **caractérisé en ce qu'**au moins un capteur (5) de mesure de la position angulaire du rotor (3) est placé, en regard des aimants permanents (4) du rotor (3), sur la face interne de la paroi axiale de la joue (1) ou sur le stator (2) parallèlement à ladite face interne.

7. Support de volet roulant selon l'une des revendications précédentes, **caractérisé en ce que** le flasque du rotor (3) est fixé à l'axe d'enroulement (6) du tablier (8) du volet.

8. Support de volet roulant selon l'une des revendications précédentes, **caractérisé en ce que** le coefficient Kv du moteur est inférieur à 1.

9. Support de volet roulant selon la revendication précédente, **caractérisé en ce que** le coefficient Kv du moteur est compris entre 0,5 et 1, de préférence de l'ordre de 0,5.

10. Volet roulant motorisé comportant un support selon les revendications précédentes.

## Patentansprüche

1. Rollladenhalter, umfassend eine Achse (6) zum Aufwickeln des Panzers (8) des Rollladens, die an ihren axialen Enden mit seitlichen Seitenstücken (1) und motorisierten Antriebsmitteln (2, 3) der Wickelachse (6) verbunden ist, wobei die Antriebsmittel (2, 3) in einem der seitlichen Seitenstücke (1) positioniert sind, **dadurch gekennzeichnet, dass** die Antriebsmittel aus einem Elektromotor, dessen Rotor (3) mit der Achse (6) verbunden ist, bestehen und der Stator (2) mit dem Seitenstück (1) fest verbunden ist.

2. Rollladenhalter nach dem vorhergehenden Anspruch, **dadurch gekennzeichnet, dass** der Elektromotor ein bürstenloser Motor ist.

3. Rollladenhalter nach dem vorhergehenden Anspruch, **dadurch gekennzeichnet, dass** der bürstenlose Motor einen externen Rotor (3), der sich an der radialen Peripherie des Stators (2) befindet, und einen Luftspalt e, der zur Drehachse des Motors parallel gestaltet ist, aufweist.

4. Rollladenhalter nach dem vorhergehenden Anspruch, **dadurch gekennzeichnet, dass** mindestens ein Sensor (5) zum Messen der Winkelposition des Rotors (3) auf der internen Seite der Querwand (la) des Seitenstücks (1) gegenüber den Dauermagneten (4) des Rotors (3) angeordnet ist.

5. Rollladenhalter nach Anspruch 2, **dadurch gekennzeichnet, dass** der bürstenlose Motor einen Scheibenrotor (3) aufweist, der einen Luftspalt e aufweist, der zur Drehachse des Rotors rechtwinklig gestaltet ist.

6. Rollladenhalter nach dem vorhergehenden Anspruch, **dadurch gekennzeichnet, dass** mindestens ein Sensor (5) zum Messen der Winkelposition des Rotors (3) den Dauermagneten (4) des Rotors (3) gegenüber auf der internen Seite der axialen Wand des Seitenstücks (1) oder an dem Stator (2) parallel zur internen Seite angeordnet ist.

7. Rollladenhalter nach einem der vorhergehenden Ansprüche, **dadurch gekennzeichnet, dass** der Flansch des Rotors (3) an der Wickelachse (6) des Panzers (8) des Rollladens befestigt ist.

8. Rollladenhalter nach einem der vorhergehenden Ansprüche, **dadurch gekennzeichnet, dass** der Kv-Wert des Motors kleiner als 1 ist.

9. Rollladenhalter nach dem vorhergehenden Anspruch, **dadurch gekennzeichnet, dass** der Kv-Wert des Motors zwischen 0,5 und 1, bevorzugt bei ungefähr 0,5 liegt.

10. Motorisierter Rollladen, umfassend einen Halter nach den vorhergehenden Ansprüchen.

## Claims

1. A roller shutter mounting, including a winding axis (6) of the apron (8) of the shutter connected at its axial ends to side flanges (1) and motorized driving means (2, 3) of said winding axis (6), said driving means (2, 3) being positioned in one of the side flanges (1), **characterized in that** the driving means consist of an electric motor whereof the rotor (3) is connected to the axis (6) and the stator (2) is secured to the flange (1).

2. The roller shutter mounting according to the preceding claim, **characterized in that** the electric motor is a brushless motor.

3. The roller shutter mounting according to the preceding claim, **characterized in that** the brushless motor has an external rotor (3) situated on the radial periphery of the stator (2), with an air gap e parallel to the rotation axis of the motor.

4. The roller shutter mounting according to the preceding claim, **characterized in that** at least one sensor (5) measuring the angular position of the rotor (3) is placed on the inner face of the transverse wall (1a) of the flange (1) across from permanent magnets (4) of the rotor (3).

5. The roller shutter mounting according to claim 2, **characterized in that** the brushless motor has a disc rotor (3) with an air gap e perpendicular to the rotation axis of the rotor.

6. The roller shutter mounting according to the preceding claim, **characterized in that** at least one sensor (5) for measuring the angular position of the rotor (3) is placed, across from permanent magnets (4) of the rotor (3), on the inner face of the axial wall of the flange (1) or on the stator (2) parallel to said inner face.

7. The roller shutter mounting according to one of the preceding claims, **characterized in that** the shroud of the rotor (3) is fastened to the winding axis (6) of the apron (8) of the shutter.

8. The roller shutter mounting according to one of the preceding claims, **characterized in that** the coefficient Kv of the motor is less than 1.

9. The roller shutter mounting according to the preceding claim, **characterized in that** the coefficient Kv of the motor is comprised between 0.5 and 1, preferably about 0.5.

10. A motorized roller shutter including a mounting according to the preceding claims.
